# EUROPEAN PATENT APPLICATION

(11) **EP 1 982 860 A2**
(43) Date of publication of application: **22.10.2008**
(21) Application number: 08251430.8
(22) Date of filing: 15.04.2008
(51) Int. Cl.: B60K 11/04

(54) **Air guide structure**

(30) Priority: 16.04.2007 JP 2007106624
(71) Applicant: Calsonic Kansei Corporation, Tokyo 164-8602 (JP)
(72) Inventor: Shiga, Satoshi, Nakano-ku, Tokyo 164-8602 (JP); Sakuma, Tsutomu, Nakano-ku, Tokyo 164-8602 (JP); Okamoto, Kosuke, Nakano-ku, Tokyo 164-8602 (JP)
(74) Representative: Oxley, Robin John George

(57) **Abstract**

An air guide structure includes a right and air guide members (2, 3) attached to radiator core support right and left side members (6, 7) of a radiator core support (1), respectively. Each of the right and left air guide members (2, 3) has a plate portion having a front side wall portion (10) and a rear side wall portion (19) which project forward in the longitudinal direction. The plate front side wall portion (10) has a forward projecting portion (11) contactable with a bumper fascia and a bumper armature, and the rear side wall portion (19) is attached to one of the right and left side members (6, 7). The plate portion has a vulnerable portion (13) elastically bendable so that the forward projecting portion (11) can be bent in a direction of a thickness of the front side wall portion (10) when an impact is applied to the forward projecting portion (11) through the bumper fascia.

## Description

The present invention relates to an air guide structure which is attached to a radiator core support of a motor vehicle and has a pair of air guide members which is located on front side of a radiator core support to guide the air toward a heat exchanger and prevent the hot air in an engine room from being blown back toward the heat exchanger.

Conventional air guide structures of this kind are disclosed in Japanese patents laid-open publication No. 2006 - 321317 and No. 2006 - 199250. These conventional air guide structures consist of a pair of air guide members: a right air guide member attached on a right radiator core support side member, and a left air guide member attached on a left radiator core support side member, both air guide members extending forward from a front portion of a motor vehicle body in a longitudinal direction thereof. They are fixed by fasteners such as clips at their rear portions on the radiator core side members in a state where they are contacted with a bumper fascia so that their contacting surfaces are sealed for effectively guiding the air and for preventing the hot air from in an engine room from being blown back toward the heat exchanger.

These conventional air guide structures, however, encounter a problem in that the air guide members is made of a substantially rigid plate to cause cracks and/or fractures in the air guide members even when a relatively light force due to vehicle crash acts on the air guide members from a front side of the motor vehicle body through the bumper fascia. In such a case of the cracks and/or fractures in the air guide members, an entire-part replacement for the air guide members is needed after the crash, which increases its repair costs.

The present invention seeks to provide an air guide structure, which is attached to a radiator core support of a motor vehicle and has a pair of air guide members, which overcomes or ameliorates at least one of the problems associated with the prior art, for example the foregoing drawbacks and absorb an impact energy by air guide members, thereby preventing or redeeming cracks and/or fractures in the air guide members from being caused, even when a relatively light force due to a vehicle crash acts on air guide members attached on the radiator core support from a front side of a motor vehicle body, so as to decrease repair costs thereof.

According to an aspect of the present invention there is provided an air guide structure which is attached to a radiator core support structure of a motor vehicle and has air guide members, the air guide structure including a first or right (i.e. towards the right of a motor vehicle when attached thereto) air guide member and a second or left (i.e. towards the left of a motor vehicle when attached thereto) air guide member, which are attached to a radiator core support first or right side member and a radiator core support second or left side member of a radiator core support, respectively, to project forward in a longitudinal direction of a motor vehicle body therefrom. Each of the right and left air guide members has a plate portion having a front side wall portion and a rear side wall portion which project forward (i.e. towards the front of a motor vehicle when attached thereto) in the longitudinal direction. The plate front side wall portion is provided with a forward projecting portion which is contactable with a bumper fascia and a bumper armature, and the rear side wall portion is attached to one of the right and left radiator core support side members. The plate portion has a vulnerable (weakened) portion which is capable of being elastically bent so that the forward projecting portion can be bent in a direction of a thickness of the front side wall portion when an impact is applied to the forward projecting portion through the bumper fascia.

Therefore, the air guide structure of the present invention seeks to prevent or reduce the air guide members from the cracks and/or fractures when a relative low impact force due to vehicle crash acts on the bumper fascia from the front side thereof through the bumper fascia, because the vulnerable portions can easily bend the forward projecting portion 11 in the thickness direction and return to its original state when the impact is removed. This can decrease repair costs of the air guide structure.

Preferably, the front side wall portion is integrally formed on an outer peripheral portion thereof with a first flange portion projecting in the direction of the thickness, and the first flange portion is provided with a pair of first cut-out portions which are continued with a top portion and a bottom portion of the vulnerable portion, respectively.

Therefore, the first flange portion can ensure necessary stiffness of the front side wall portion, and the first cut-out portion can easily bend the forward projecting portion along the vulnerable portion when the impact force acts on the bumper fascia.

Preferably, the first flange portion is formed with a second cut-out portion at a front of the first cut-out portions.

Therefore, the second cut-out portion decreases the stiffness of a peripheral portion thereof, so that a front portion located at a front of the vulnerable portion can be easily bent, improving its impact absorbing characteristic.

Preferably, the rear side wall portion is integrally formed with a second flange portion which are bent in the direction of the thickness, the second flange portion is provided with an upper side-member fixing portion and a lower side-member fixing portion which are located at an upper position and a lower position of the second flange portion, respectively, where the second flange portion is formed with a third cut-out portion at a position between

Therefore, the second flange portion can ensure necessary stiffness of the rear side wall portion, and the third cut-off portion allows the air guide members to bend forward in a mark like "<" to absorb the impact energy when a relative large impact force acts on the bumper fascia.

Preferably, the vulnerable portion is a thin-walled portion which has a wall thinner than thicknesses of the front side wall portion and the rear side wall portion.

Therefore, the vulnerable (weakened) portion can be easily manufactured, and it allows the forward projecting portion to bend along the thin-walled portion.

Preferably, the thin-walled portion extends from a top portion to a bottom portion of the front side wall portion.

Therefore, the vulnerable portion can be easily manufactured, and it can effectively bend the forward projecting portion when the impact force acts on the bumper fascia.

Preferably, the front side wall portion is provided at a rear side thereof with a vertical flat portion which is capable of contacting with a rear surface of the bumper armature.

Therefore, they can seal their contacting portions for effectively guiding the air to the heat exchanger.

Preferably, the first flange portion formed on the forward projecting portion is capable of contacting with the bumper fascia.

Therefore, they can seal their contacting portions for effectively guiding the air to the heat exchanger, and the forward projecting portion can receive the impact energy when the impact force acts on the bumper fascia.

Preferably, an opening for allowing a pipe of a heat exchanger mounded on the radiator core support to pass therethrough.

Therefore, piping of the heat exchanger can be easily made, and the opening enables the front side wall portion and the rear side wall portion to easily bend to absorb the impact energy when the impact is applied to the air guide members.

Preferably, the right and left air guide members are made of plastic material with flexibility.

Therefore, the right and left air guide members can be easily manufactured and they can return to the original state when the impact force is removed.

The objects, features and advantages of the present invention will become apparent as the description proceeds when taken in conjunction with the accompanying drawings, in which:
FIG. 1 is a front perspective view showing a radiator core support with an air guide structure, having a pair of air guide members, of an embodiment according to the present invention, before the air guide members are attached to a radiator core support;
FIG. 2 is a front perspective view showing the radiator core support with the air guide structure of the embodiment, after air guide members are attached to the radiator core support;
FIG. 3 is an enlarged front perspective view showing a right air guide member of the air guide structure of the embodiment shown in FIGS. 1 and 2;
FIG. 4 is an enlarged front perspective view, seen in a direction indicated by an arrow A1 in FIG. 3, showing the right air guide member shown in FIGS. 1 and 2;
FIG. 5 is an enlarged plan view, seen in a direction indicated by an arrow A2 in FIG. 4, of a part of a forward projecting portion of the right air guide member shown in FIGS. 3 and 4; and
FIG. 6 is an enlarged front perspective view, showing the forward projecting portion of the right air guide member, shown in FIGS. 3 and 4, in a state where the forward projecting portion is deformed when a relatively light crash force is applied to a front portion of a motor vehicle body.

Throughout the following detailed description, similar reference characters and numbers refer to similar elements in all figures of the drawings, and their descriptions are omitted for eliminating duplication.

An air guide structure of a preferred embodiment according to the present invention will be described with reference to the accompanying drawings.

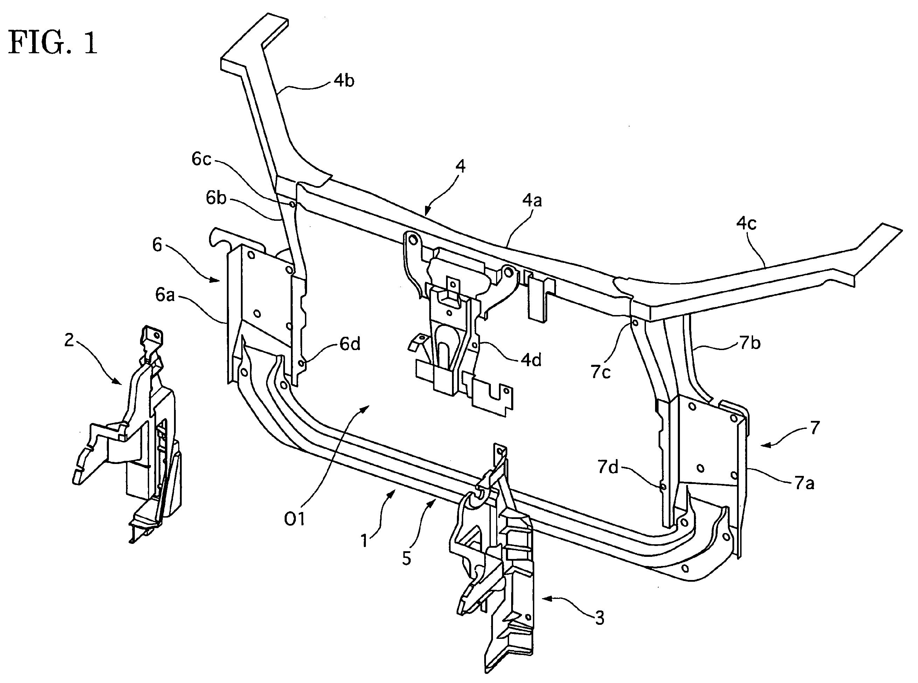

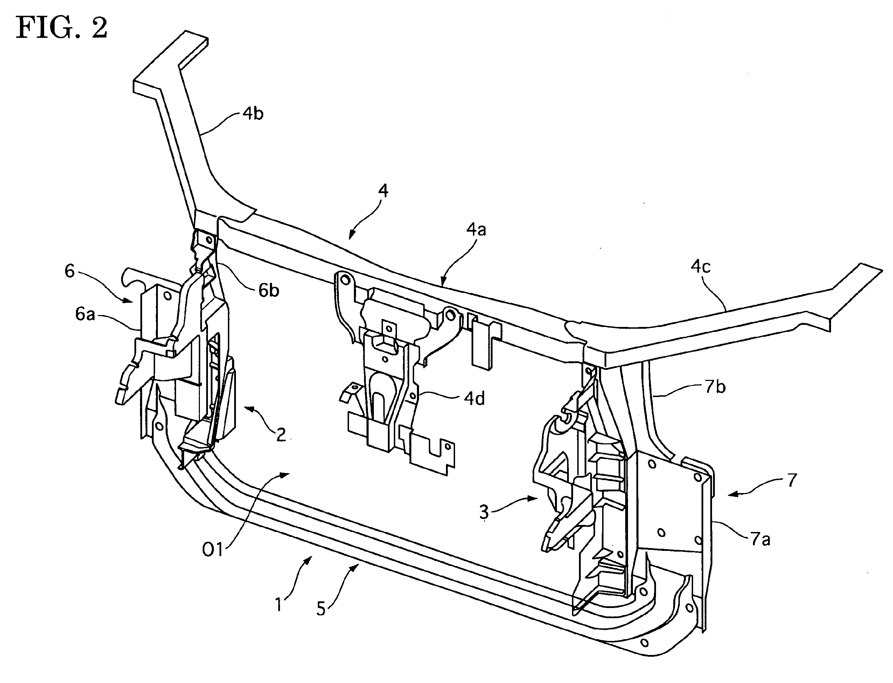

Referring to FIGS. 1 and 2 of the drawings, there is shown a radiator core support 1 which is adapted for a motor vehicle and is attached with an air guide structure of the embodiment. In the following description, terms "right", "left", "inner" and "outer" are used with respect to a not shown motor vehicle body, but not with respect to the attached drawings.

The radiator core support 1 is mounted on a front portion of the motor vehicle body to function as a part of the motor vehicle body. A right air guide member 2 and a left air guide member 3 are attached on a front side of the radiator core support 1 so that they projects forward from the radiator core support 1.

The radiator core support 1 has a radiator core support upper member 4, a lower radiator core support lower member 5 arranged under and in parallel with the radiator core support upper member 4, a radiator core support right side member 6 and a radiator core support left side member 7.

The radiator core support upper member 4 includes a radiator core support upper center member 4a formed like a U-letter shape with a rear opening, a right upper side member 4b and a left upper side member 4c, where the upper side members 4b and 4c are formed like a U-letter shape with a lower opening and fixed to the right and left end portion of the upper center member 4a, respectively, to extend rearward and obliquely outwardly therefrom.

The radiator core support lower member 5 is formed like a U-letter shape with a rear opening, having a plurality of ribs formed therein.

The upper center member 4a and the lower member 5 extend in a lateral direction of the motor vehicle body when the radiator core support 1 is mounted on the front side portion of the motor vehicle.

The radiator core support right side member 6 is connected with right side edge portions of the upper center member 4a and the lower member 5, and the radiator core support left side member 7 is connected with left side edge portions of the upper center member 4a and the lower member 5.

Specifically, the right side member 6 consists of a right side-member fixing portion 6a and a right connecting member 6b, where a lower portion of the fixing portion 6a is fixed on the right end portion of the lower member 5 and an upper portion thereof is connected with the right end portion of the upper center member 4a through the right connecting member 6b. The left side member 7 consists of a left side-member fixing portion 7a and a left connecting member 7b, where a lower portion of the fixing portion 7a is fixed on the left end portion of the lower member 5 and an upper portion thereof is connected with the left end portion of the upper center member 4a through the left connecting member 7b.

The right side-member fixing portion 6a and the left side-member fixing portion 7a are fixed to a not-shown right front end portion and a not-shown left front end portion of the motor vehicle body, respectively, where both of the right and left front end portions of the motor vehicle extend in a longitudinal direction of the motor vehicle body,

A hood lock stay 4d is fixed to the upper center member 4a at its center portion.

The radiator core support 1 is entirely made of plastic material in this embodiment, while a part of the radiator core support 1 may be made of plastic material and the rest thereof may be made of metal.

A not-shown core of a radiator is mounted on the lower member 5 and attached on the upper center member 4a between the right and left side members 6 and 7, and a not-shown core of a condenser is supported on the lower member 5 at a front of the radiator. The radiator and the condenser correspond to a heat exchanger of the present invention.

The right air guide member 2 and the left air guide member 3 are attached to the right radiator core support side member 6 and the left radiator core support side member 7 at front sides thereof to project therefrom, respectively. The right air guide member 2 and the left air guide member 3 have configurations which are bilaterally symmetric to each other, and they are made of plastic material with relatively flexibility, such as polypropylene (PP), polyethylene (PE) and low density polyethylene (LDPE), and are integrally formed to be thin.

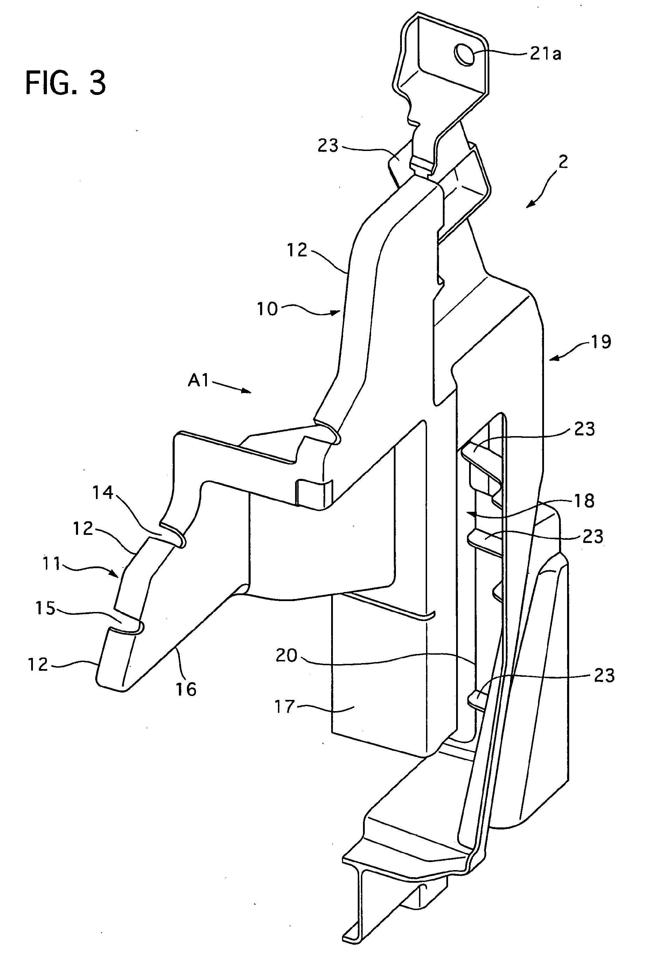

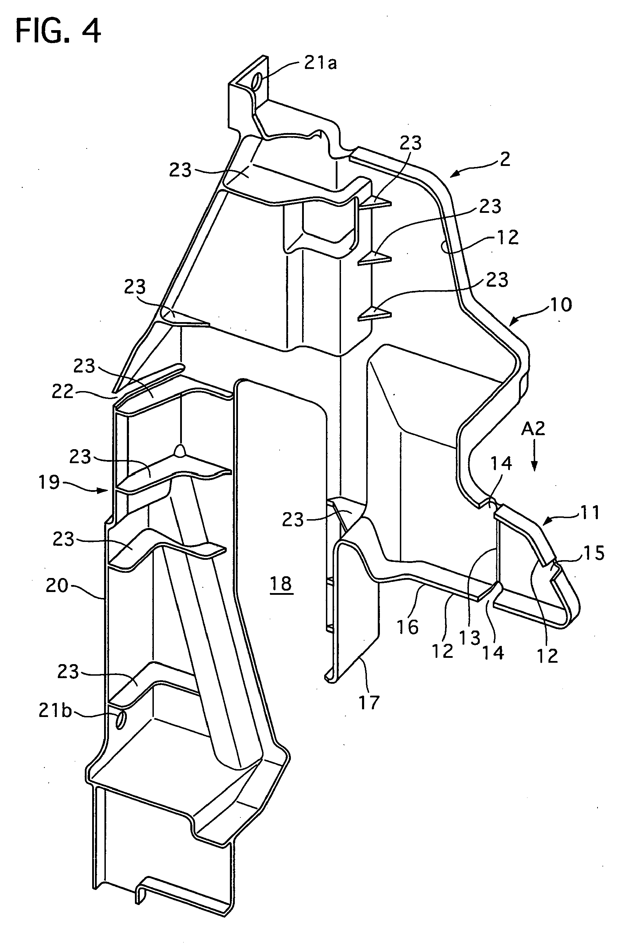

Hereinafter, the right air guide member 2 will be mainly described with reference to FIGS. 3 and 4, since the left air guide member 3 is bilaterally symmetric to the right air guide member 2.

The right air guide member 2 has a plate portion consisting of a font side wall portion 10 and a rear side wall portion 19 continued to each other, where both of the front side wall portion 10 and the rear side wall portion 19 are formed to extend forward in the longitudinal direction when the right air guide member 2 is attached to the radiator core support 1 fixed to the motor vehicle body.

A top portion of the front side wall portion 10 is formed so that it becomes lower as it goes forward. The front side wall portion 10 includes a forward projecting portion 11, where the forward projecting portion 11 is capable of contacting at an upper portion of the first flange portion 12 thereof with a rear surface of a not-shown bumper fascia. The outer peripheral portion of the front side wall portion 10 is integrally provided with a first flange portion 12, which is bent outwardly in the lateral direction, namely in a direction of a thickness of the front side wall portion 10, so as to ensure necessary stiffness of the top portion and its peripheral portion.

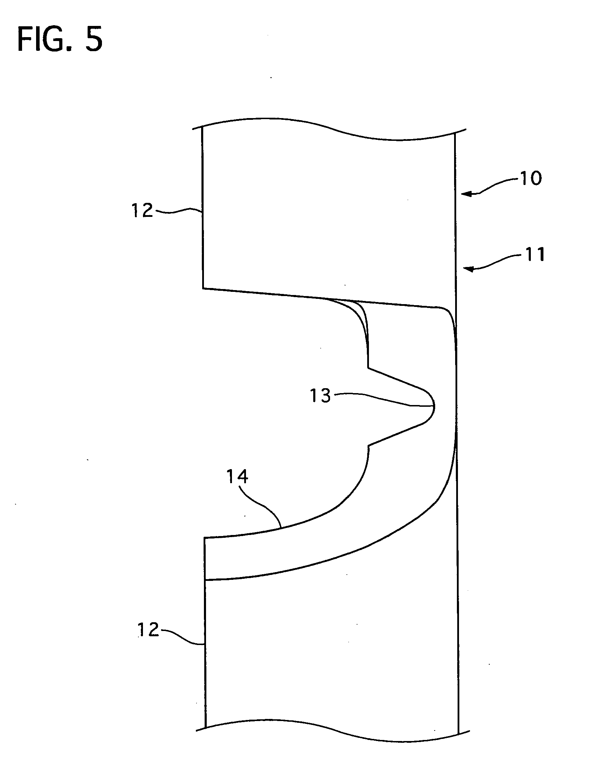

As shown in FIGS. 4 and 5, the forward projecting portion 11 is formed on its outer side to have a thin-walled portion 13, which vertically extends and is thinner than other portion of the forward projecting portion 11. The thin-walled portion 13 corresponds to a vulnerable portion of the present invention.

The first flange portion 12 has two first cut-out portions 14 and 14 at a top portion and a bottom portion of the thin-walled portion 13. In addition, the first flange portion 12 also has a second cut-out portion 15 on an upper side thereof at a front of the first cut-out portions 14 and 14. A lower side surface, corresponding to the front side wall portion 10 including the forward projecting portion 11, of the first flange portion 12 is formed to be flat as a horizontal flat surface 16, which extends horizontally in the longitudinal direction so that the horizontal flat surface 16 can contact with an upper surface of a not-shown bumper armature extending in the lateral direction so as to seal their contacted portions.

A vertical flat portion 17 is formed to continue to the first flange portion 12 and extend downward from a rear portion of the horizontal flat surface 16. The vertical flat portion 17 has a vertical flat surface, which is capable of contacting with a not-shown rear surface of the bumper armature so as to seal their contacted portions.

At a rear side of the vertical flat portion 17, an opening 18 is formed between the front side wall portion 10 and the rear side wall portion 19 so as to allow not-shown pipes of the condenser to pass therethrough.

On the other hand, the rear side wall portion 19 is formed to have a second flange portion 20, which is bent outwardly in the lateral direction and extending vertically so as to ensure necessary stiffness of a rear end portion of the rear side wall portion 19 and its peripheral portion. The second flange portion 20 is provided at its top portion and bottom portion with an upper through-hole 21a and a lower through-hole 21b, respectively. The upper through-hole 21 corresponds to an upper side-member fixing portion of the present invention, and the lower through-hole 21b corresponds to a lower side-member fixing portion of the present invention.

The upper through-hole 21a and the lower through-hole 21b are provided at positions corresponding to positions of an upper through-hole 6c, provided on the upper portion of the right connecting member 6b of the radiator core support right side member 6, and a lower through-hole 6d, provided on the lower portion of the right side-member fixing portion 6a of the radiator core support right side member 6, respectively. This enables the right and left side guide members 2 and 3 to be respectively attached on the right and left side members 6 and 7, by using fasteners such as clips and bolts which are inserted through the through-holes 21a, 21b, 6c and 6d. In this attachment state, the right and left air guide members 2 and 3 are projected forward relative to the radiator core support 1.

The second flange portion 20 is formed to have a third cut-out portion 22 between the upper through-hole 21a and the lower through-hole 21b, substantially having the same height as those of a top end portion of the opening 18 and the highest portion of the forward projecting portion 11. The second flange portion 20 seals a gap between the heat exchanger and the radiator core support right side member 6.

A plurality of ribs 23 are provided between the rear side wall portion 19 and the second flange portion 20 and between the front side wall portion 10 and a stepped portion located above the vertical flat portion 17.

The left air guide member 2 is formed similarly to the right air guide member 3.

Next, the operation of the air guide structure of the embodiment will be described.

In the thus-constructed air guide structure, the front side wall portions 10 and the rear side wall portions 19 of the right and left air guide members 2 and 3 guide the air taken toward a front surface of the core of the heat exchanger through a not-shown front grill, thereby providing better air guide efficiency. In addition, the second flange portions 20 of the right and left side members 2 and 3 seal the gaps between the radiator core support 1 and the heat exchanger, thereby providing better air guide efficiency and preventing the hot air in the engine room from being blown back to the front surface of the core of the heat exchanger. Similarly, the forward projecting portions 11 of the right and left air guide members 2 and 3 seal gaps between them and the bumper fascia, thereby providing better air guide efficiency.

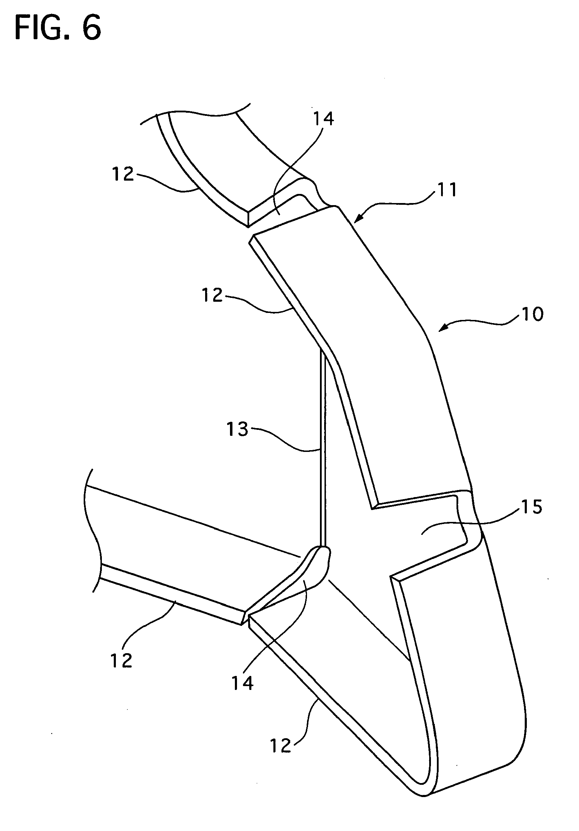

In a case of a vehicle crash in a state where a crash impact is relatively low, the impact is inputted to the forward projecting portion 11 of the right and left air guide members 2 and 3 through the bumper fascia. The forward projecting portion 11 are elastically bent outwardly by the impact at the thin-walled portion 13 as shown in FIG. 6. This elastic bending can absorb the impact and prevents the font side wall portion 10 from being damaged or reduces the damage.

The first cut-out portions 14 and 14 of the first flange portion 12 have a stimulating effect on easy bending of the forward projecting portion 11 together with an existence of the thin-walled portion 13.

Further, the second cut-out portions 15 decreases stiffness of a front portion, which is located ahead of the thin-walled portions 13, of the first flange portion 12 of the forward projecting portion 11, so that the front portion is capable of easily bending. Accordingly, the thin-walled portions 13 start to bend first in the forward projecting portion 11 when the impact acts.

After the crash, the impact disappears, and the bent forward projecting portion 11 returns to its original configuration without cracks and fractures. This can eliminate or reduce repair costs thereof.

On the other hand, in a vehicle crash in a state where the crash impact is relatively larger, the forward projecting portion 11 is bent outwardly in the lateral direction, and the upper portion of the air guide portions 2 and 3 are bent forward in a shape like a mark "<" to absorb more energy. In other words, the air guide members functions as an impact absorber.

The air guide structure of the embodiment has the following advantages.

The air guide structure of the present invention can prevent the air guide members 2 and 3 from cracks and/or fractures or reduce same when a relatively low impact force due to vehicle crash acts on an air guide members 2 and 3 from the front side thereof through the bumper fascia, because the thin-walled portions 13 can be easily bend the forward projecting portion 11 in the thickness direction and return to its original state when the impact is removed. This can decrease repair costs of the air guide structure.

The first flange portion 12 can ensure necessary stiffness of the front side wall portion 10, and the first cut-out portions 14 and 14 can easily bend the forward projecting portion 11 along the thin-walled portion 13 when the impact force acts on the bumper fascia.

The second cut-out portion 15 decreases the stiffness of the peripheral portion thereof, so that the front portion located at the front of the thin-walled portion 13 can be easily bent, improving its impact absorbing characteristic.

The second flange portion 20 can ensure necessary stiffness of the rear side wall portion 19, and the third cut-off portion 22 allows the air guide members 2 and 3 to bend forward in a mark like "<" to absorb the impact energy when a relatively larger impact force acts on the bumper fascia.

The thin-walled portion 13 can be easily manufactured, and it allows the forward projecting portion 11 to bend along the thin-walled portion 13, effectively bending the forward projecting portion 11 when an impact force acts on the bumper fascia.

The vertical flat portion 17 can seal the contacting portions of the vertical flat portion 17 and the rear surface of the bumper armature for effectively guiding the air to the heat exchanger.

The forward projecting portion 11 can seal the contacting portions of the forward projecting portion 11 and the bumper fascia for effectively guiding the air to the heat exchanger, and the forward projecting portion 11 can receive the impact energy when the impact force acts on the bumper fascia.

The piping of the heat exchanger can be easily made, and the opening 18 enables the front side wall portion 10 and the rear side wall portion 19 to easily bend to absorb the impact energy when the impact is applied to the air guide members 2 and 3.

The right and left air guide members 2 and 3 can be easily manufactured and they can return to the original state when the impact force is removed.

While there have been particularly shown and described with reference to preferred embodiments thereof, it will be understood that various modifications may be made therein.

For example, any portion, such as the vulnerable portions and cut-out portions, of the air guide member described in the embodiment may be appropriately set in its material, configurations, positions, the number and others.

The location of the vulnerable portion may be varied to appropriately change bending position.

The thin-walled portion 13 is used as the vulnerable portion of the air guide member in the embodiment, while it is not limited to that, for example it may employ a portion with a cross section like an accordion or corrugated.

## Claims

1. An air guide structure, adapted for a motor vehicle, comprising:
a right air guide member (2) that is attached to a radiator core support right side member (6) of a radiator core support (1) to project forward in a longitudinal direction of a motor vehicle body therefrom; and
a left air guide member (3) that is attached to a radiator core support left side member (7) of the radiator core support (1) to project forward in the longitudinal direction therefrom, wherein
each of the right air guide member (2) and the left air guide member (3) has a plate portion having a front side wall portion (10) and a rear side wall portion (19) which project forward in the longitudinal direction, the plate front side wall portion (10) being provided with a forward projecting portion (11) being contactable with a bumper fascia and a bumper armature, and the rear side wall portion (19) being attached to one of the radiator core support right and left side members (6, 7), and wherein
the plate portion has a vulnerable portion (13) which is capable of being elastically bent so that the forward projecting portion (11) can be bent in a direction of a thickness of the front side wall portion (10) when an impact is applied to the forward projecting portion (11) through the bumper fascia.

2. The air guide structure according to claim 1, wherein
the front side wall portion (10) is integrally formed on an outer peripheral portion thereof with a first flange portion (12) projecting in the direction of the thickness, and wherein
the first flange portion (12) is provided with a pair of first cut-out portions (14, 14) which are continued with a top portion and a bottom portion of the vulnerable portion (13), respectively.

3. The air guide structure according to claim 1 or claim 2, wherein
the first flange portion (12) is formed with a second cut-out portion at a front of the first cut-out portions (14, 14).

4. The air guide structure according to any one of claims 1 to 3, wherein
the rear side wall portion (19) is integrally formed with a second flange portion (20) which are bent in the direction of the thickness, the second flange portion (20) is provided with an upper side-member fixing portion (21a) and a lower side-member fixing portion (21b) which are located at an upper position and a lower position of the second flange portion (20), respectively, and wherein
the second flange portion (20) is formed with a third cut-out portion (22) at a position between the upper side member fixing portion (21a) and the lower side member fixing portion (2b).

5. The air guide structure according to any one of claims 1 to 4, wherein
the vulnerable portion is a thin-walled portion (13) which has a wall thinner than thicknesses of the front side wall portion (10) and the rear side wall portion (19).

6. The air guide structure according to claim 5, wherein
the thin-walled portion (13) extends from a top portion to a bottom portion of the front side wall portion (10).

7. The air guide structure according to any one of claims 1 to 6, wherein
the front side wall portion (10) is provided at a rear side thereof with a vertical flat portion (17) which is capable of contacting with a rear surface of the bumper armature.

8. The air guide structure according to any one of claims 1 to 7, wherein
the first flange portion (12) formed on the forward projecting portion (11) is capable of contacting with the bumper fascia.

9. The air guide structure according to any one of claims 1 to 8, wherein
an opening (18) for allowing a pipe of a heat exchanger mounded on the radiator core support (1) to pass therethrough.

10. The air guide structure according to any one of claims 1 to 9, wherein
the right and left air guide members (2, 3) are made of plastic material with flexibility.
